# EUROPÄISCHE PATENTSCHRIFT

(11) **EP 1 685 895 B1**
(45) Veröffentlichungstag und Bekanntmachung des Hinweises auf die Patenterteilung: **13.03.2013**
(21) Anmeldenummer: 06000768.9
(22) Anmeldetag: 14.01.2006
(51) Int. Cl.: B01F 17/52, C08G 81/00, C09B 67/46, C09D 17/00, C09D 11/02, C09D 7/12

(54) **Polyether/Polyester enthaltende Dispergierharze**
Polyether/polyester containing, dispersing resins.
Résines de dispersion contenant un polyéther/polyester.

(30) Priorität: 28.01.2005 DE 102005004024
(43) Veröffentlichungstag der Anmeldung: 02.08.2006
(73) Patentinhaber: Evonik Goldschmidt GmbH, 45127 Essen (DE)
(72) Erfinder: Alzer, Cornelia, 45149 Essen (DE); Cavaleiro, Pedro, Dr., 41749 Viersen (DE); Esselborn, Eberhard, 45147 Essen (DE); Lehmann, Kathrin, 51377 Leverkusen (DE); Oestrich, Sascha, Dr., 45279 Essen (DE)

(56) Entgegenhaltungen:
- EP-A2- 0 325 054
- EP-A2- 0 358 358
- WO-A1-01/21298
- WO-A1-02/16471

## Beschreibung

Für die Dispergierung von Feststoffen (z.B. Füllstoffen, Farbstoffen oder Pigmenten) in flüssigen Medien bedient man sich in der Regel Dispergiermitteln, um eine effektive Dispergierung der Feststoffe zu erreichen, die zur Dispergierung benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Materialien die Oberfläche der zu dispergierenden Partikel und stabilisieren diese gegen eine unerwünschte Reagglomeration.

Dispergiermittel erleichtern bei der Herstellung von Farben, Lacken, Druckfarben und sonstigen Beschichtungsstoffen die Einarbeitung von Feststoffen, wie zum Beispiel Füllstoffen und Pigmenten, die als wichtige Formulierungsbestandteile das optische Erscheinungsbild und die physikalisch-chemischen Eigenschaften von derartigen Systemen wesentlich bestimmen. Für eine optimale Ausnutzung müssen diese Feststoffe zum einen gleichmäßig in den Formulierungen verteilt werden, zum anderen muß die einmal erreichte Verteilung stabilisiert werden.

Eine Vielzahl verschiedener Substanzen findet heute Verwendung als Dispergiermittel für Feststoffe. Neben sehr einfachen, niedermolekularen Verbindungen, wie z.B. Lecithin, Fettsäuren und deren Salze und AJkylphenolethoxylate, wehrden auch komplexere hochmolekulare Strukturen als Dispergiermittel eingesetzt. Hier sind es speziell amino- und amidofunktionelle Systeme, die breite Verwendung finden.

US-A-4 224 212, EP-B-0 208 041, WO-A-00/24503 und WO-A-01/21298 beschreiben zum Beispiel Dispergiermittel auf der Basis von Polyester-modifizierten Polyaminen. DE-B-197 32 251 beschreibt Polyaminsalze und deren Einsatz als Dispergiermittel für Pigmente und Füllstoffe.

Weiter Dispergier midtel / sind aus EP-A358358 bekannt.

Jedoch sind mit dem Einsatz solcher Produkte auch eine Vielzahl von Nachteilen verbunden: Beim Einsatz in Pigmentpasten sind häufig hohe Gehalte an Dispergieradditiven erforderlich; die erreichbaren Pigmentierungshöhen der Pasten sind unbefriedigend niedrig; die Stabilität der Pasten und damit deren Viskositätskonstanz ist unzureichend; Flockulation und Aggregation lassen sich nicht immer vermeiden. Vielfach mangelt es an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungsstoffen negativ beeinflusst, zudem der bei der Herstellung und Verarbeitung entstehende, unerwünschte Schaum zusätzlich stabilisiert. Auch wird - bedingt durch mangelnde Verträglichkeit der Dispergierharze in vielen Auflackgütern - vielfach in unerwünschter Weise der Glanz beeinträchtigt.

Es besteht daher ein wachsender Bedarf an Dispergiermitteln für Feststoffe, die gegenüber dem Stand der Technik weiter verbesserte Eigenschaften zeigen. Gefordert sind Dispergiermittel, die eine möglichst hohe stabilisierende Wirkung auf eine Vielzahl von unterschiedlichen Feststoffen haben.

Zum Beispiel kann mit effektiveren Dispergiermitteln die Einsatzmenge von hochpreisigen Pigmenten reduziert werden ohne Einbußen bei der Farbstärke in Kauf nehmen zu müssen. Weiterhin wird das Viskositätsverhalten von Pasten, Farben, Lacken, Druckfarben und sonstigen Beschichtungsstoffen, die Farbstoffe, Feststoffe, wie Füllstoffe und/oder Pigmente enthalten, wesentlich durch das verwendete Dispergiermittel mitbestimmt. Hier sind vor allem Dispergiermittel gefragt, die eine möglichst geringe Viskosität in den flüssigen Farben und Lacken hervorrufen und auch beibehalten, wobei ein newtonsches Viskositätsverhalten bevorzugt ist.

Es war daher die Aufgabe der vorliegenden Erfindung, Dispergiermittel für Feststoffe bereitzustellen, die eine verbesserte Dispergierleistung zeigen und die Viskosität und das rheologische Verhalten von Formulierungen, die Feststoffe enthalten, positiv zu beeinflussen.

Überraschenderweise wurde nun gefunden, dass die vorgenannte Aufgabe gelöst wird durch neue Dispergierharze für Feststoffe, erhältlich durch die teilweise oder vollständige Umsetzung von
A) einem oder mehreren aminofunktionellen Polymeren mit
B) einem oder mehreren Polyestern der allgemeinen Formeln (I) / (Ia)

   T-C(O)-[O-A-C(O)]ₓ-OH (I)

   T-O-[C(O)-A-O-]_{y}-Z (Ia)

   und
C) einem oder mehreren Polyethern der allgemeinen Formel (II) / (IIa)

   T-C(O)-B-Z (II)

   T-O-B-Z (IIa)

   worin
   T ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
   A mindestens ein zweiwertiger Rest ist, ausgesucht aus der Gruppe der linearen, verzweigten, cyclischen und aromatischen Kohlenwasserstoffe,
   Z mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)-Acrylsäure,
   B ein Rest der allgemeinen Formel (III) ist

      -(C₁H₂₁O)ₐ-(CₘH₂ₘO)_{b}-(CₙH₂ₙO)_{c}-(SO)_{d}- (III)

      a,b,c unabhängig voneinander Werte von 0 bis 100 sind,
         mit der Maßgabe, dass die Summe aus a + b + c > 0, vorzugsweise 5 bis 35, insbesondere 10 bis 20 ist, mit der Maßgabe, dass die Summe aus a+b+c+d>0,
      d ≥ 0, vorzugsweise 1 bis 5 ist,
      1,m,n unabhängig voneinander ≥ 2, vorzugsweise 2 bis 4 ist,
   x,y unabhängig voneinander ≥ 2 sind.

Die Reaktionsprodukte können in Form der Amide und/oder der entsprechenden Salze vorliegen. Weist der Molekülteil "Z" eine Mehrfachbindung auf, wie dies beispielsweise bei den Polyethern und den Alkohol gestarteten Polyestern der Fall sein kann, in denen die endständige OH-Gruppe mit einer ungesättigten Säure wie (Meth)acrylsäure verestert wurde, erfolgt die Bindung über eine Michael-Addition der NH-Funktion an die Doppelbindung.

Beispiele für aminofunktionelle Polymere sind aminofunktionelle Polyaminosäuren wie Polylysin von Aldrich Chemical Co.; aminofunktionelle Silicone, welche unter dem Handelsnamen Tegomer® ASi 2122 von der Degussa AG; Polyamidoamine, welche unter dem Handelsnamen Polypox®, Aradur® oder "Starburst®" Dendrimere von Aldrich Chemical Co.; Polyallylamine und Poly(N-alkyl)allylamine welche unter den Handelsnamen PAA von Nitto Boseki; Polyvinylamine, welche unter dem Handelsnamen Lupamin® von BASF AG; Polyalkylenimine, wie zum Beispiel Polyethylenimine, welche unter den Handelsnamen Epomin® (Nippon Shokubai Co., Ltd.), Lupasol® (BASF AG); Polypropyleneimine, welche unter dem Handelsnamen Astramol® von DSM AG, erhältlich sind. Weitere Beispiele an aminofunktionellen Polymeren stellen die o.g. Systeme durch Vernetzung mit aminreaktiven Gruppen dar. Diese Vernetzungsreaktion erfolgt beispielsweise über mehrfunktionelle Isocyanate, Carbonsäuren, (Meth)acrylate und Epoxiden. Weitere Beispiele sind Poly(meth)acrylatpolymere, die Dimethylaminopropyl(meth)-acrylamid (Degussa AG) oder Dimethylaminoethyl(meth)acrylat (Degussa AG) als Monomere beinhalten.

Es ist dem Fachmann bekannt, dass auch andere aminofunktionelle Polymere möglich sind.

Typischerweise werden aminofunktionelle Polymere mit einem Molekulargewicht von 400 g/mol bis 600.000 g/mol verwandt.

Beispiele für den Rest T sind Alkylreste mit 1 bis 24 Kohlenstoffatomen, wie der Methyl-, Ethyl-, Propyl-, iso-Propyl-, Butyl-, iso-Butyl-, tertiär-Butyl-, Hexyl-, isoHexyl-, Octyl-, Nonyl-, iso-Nonyl-, Decyl-, Dodecyl-, Hexadecyl- und Octadecylrest. Beispiele für gegebenenfalls substituierte Aryl- oder Arylalkylreste mit bis zu 24 Kohlenstoffatomen, sind der Phenyl-, Benzyl-, Toluyl- oder Phenethylrest.

DiePolyestergruppen -[O-A-C(O)C)]ₓ- und -[C(O)-A-O-]_{y}- enthalten durchschnittlich mehr als zwei Estergruppen und weisen ein mittleres Molekulargewicht Mₙ von 100 bis 5.000 g/mol auf. Besonders bevorzugt ist ein Wert von Mₙ = 200 bis 2.000 g/mol.

Eine besonders bevorzugte Ausführungsform der vorliegenden Erfindung ist dadurch gekennzeichnet, dass die Polyestergruppe durch an sich bekannte Verfahren durch ringöffnende Polymerisation mit einem Startermolekül wie T-CH₂-OH oder T-COOH und ein oder mehreren Lactonen, wie zum Beispiel β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton, 5-Hydroxydodecansäurelacton, 12-Hydroxydodecansäurelacton, 12-Hydroxy-9-octa-decensäure, 12-Hydroxyoctadecansäure, erhalten wird.

Startermoleküle wie T-COOH - sowie die daraus herstellbaren Fettalkohole T-CH₂-OH - sind vorzugsweise die auf diesem Gebiet bekannten und üblichen einbasischen Fettsäuren auf Basis natürlicher pflanzlicher oder tierischer Fette und Öle mit 6 bis 24 Kohlenstoffatomen, insbesondere mit 12 bis 18 Kohlenstoffatomen, wie Capronsäure, Caprylsäure, Caprinsäure, Laurinsäure, Myristinsäure, Palmitinsäure, Palmitoleinsäure, Isostearinsäure, Stearinsäure, Ölsäure, Linolsäure, Petroselinsäure, Elaidinsäure, Arachinsäure, Behensäure, Erucasäure, Gadoleinsäure, Rapsölfettsäure, Sojaölfettsäure, Sonnenblumenölfettsäure, Tallölfettsäure welche allein oder in Mischung in Form ihrer Glyceride, Methyl- oder Ethylester oder als freie Säuren eingesetzt werden können, sowie die bei der Druckspaltung anfallenden technischen Mischungen. Geeignet sind prinzipiell alle Fettsäuren mit ähnlicher Kettenverteilung.

Der Gehalt dieser Fettsäuren bzw. Fettsäureester an ungesättigten Anteilen, wird - soweit dies erforderlich ist - durch die bekannten katalytischen Hydrierverfahren auf eine gewünschte Jodzahl eingestellt oder durch Abmischung von vollhydrierten mit nichthydrierten Fettkomponenten erzielt.

Die Jodzahl, als Maßzahl für den durchschnittlichen Sättigungsgrad einer Fettsäure, ist die Jodmenge, welche von 100 g der Verbindung zur Absättigung der Doppelbindungen aufgenommen wird.

Sowohl die Fettsäuren als auch die resultierenden Alkohole können durch Anlagerung von Alkylenoxiden, insbesondere Ethylenoxid und/oder Styroloxid, modifiziert werden.

Beispiele für die Polyetherbausteine von B sind Alkylenoxide wie: Ethylenoxid, Propylenoxid, Butylenoxid, Styroloxid, Dodecenoxid, Tetradecenoxid, 2,3-Dimethyloxiran, Cyclopentenoxid, 1,2-Epoxypentan, 2-Isopropyloxiran, Glycidylmethylester, Glycidylisopropylester, Epichlorhydrin, 3-Methoxy-2,2-dimethyloxiran, 8-oxabi-cyclo[5.1.0]octan, 2-Pentyloxiran, 2-Methyl-3-phenyloxiran, 2,3-Epoxypropylbenzol, 2-(4-Fluorophenyl)oxiran, Tetrahydrofuran, sowie deren reine Enantiomerenpaare oder Enantiomerengemische.

Die Gruppe Z kann aus Additionsprodukten der Carbonsäureanhydriden wie z.B. Bernsteinsäureanhydrid, Maleinsäureanhydrid oder Phthalsäureanhydrid aufgebaut sein.

Das gewichtsmäßige Verhältniss von Polyester zu Polyether im erfindungsgemäßen Dispergierharz liegt zwischen 50 : 1 und 1 : 9, vorzugsweise zwischen 40 : 1 und 1 : 5 und besonders bevorzugt zwischen 30 : 1 und 1 : 1.

Weitere Gegenstände der Erfindung sind die Verwendung der erfindungsgemäßen Dispergierharze zur Dispergierung von Feststoffen in flüssigen Medien sowie diese Dispergierharze enthaltenden Dispersionen wie beispielsweise Pigmentpasten, Beschichtungsstoffe, Druckfarben und/oder Drucklacke.

Ein Feststoff im Sinne der vorliegenden Erfindung kann prinzipiell jedes feste organische oder anorganische Material sein.

Beispiele solcher Feststoffe sind Pigmente, Füllstoffe, Farbstoffe, optische Aufheller, keramische Materialien, magnetische Materialien, nanodisperse Feststoffe, Metalle, Biozide, Agrochemikalien und Pharmaka, welche als Dispersionen angewendet werden.

Bevorzugte Feststoffe sind Pigmente, wie sie zum Beispiel im "Colour Index, Third Edition, Volume 3; The Society of Dyers and Colorists (1982)" und den nachfolgenden, überarbeiteten Auflagen genannt werden.

Beispiele für Pigmente sind anorganische Pigmente, wie Ruße, Titandioxide, Zinkoxide, Preußischblau, Eisenoxide, Cadmiumsulfide, Chrompigmente, wie zum Beispiel Chromate, Molybdate und gemischte Chromate und Sulfate des Bleis, Zink, Barium, Calcium und deren Mischungen. Weitere Beispiele für anorganische Pigmente werden in dem Buch "H. Endriss, Aktuelle anorganische Bunt-Pigmente, Vincentz Verlag, Hannover (1997)" genannt.

Beispiele für organische Pigmente sind solche aus der Gruppe der Azo-, Diazo-, kondensierten Azo-, Naphtol-, Metallkomplex-, Thioindigo-, Indanthron-, Isoindanthron-, Anthanthron-, Anthrachinon-, Isodibenzanthron-, Triphendioxazin-, Chinacridon-, Perylen-, Diketopyrrolopyrrol und Phtalocyaninpigmente. Weitere Beispiele für organische Pigmente werden in dem Buch "W. Herbst, K. Hunger, Industrial Organic Pigments, VCH, Weinheim (1993)" genannt.

Weitere bevorzugte Feststoffe sind Füllstoffe, wie zum Beispiel Talk, Kaolin, Kieselsäuren, Baryte und Kalk; keramische Materialien, wie zum Beispiel Aluminiumoxide, Silicate, Zirkonoxide, Titanoxide, Bornitride, Siliziumnitride, Borcarbide, gemischte Silizium-Aluminiumnitride und Metall-Titanate; magnetische Materialien, wie zum Beispiel magnetische Oxide von Übergangsmetallen, wie Eisenoxide, Kobalt dotierte Eisenoxide und Ferrite; Metalle, wie zum Beispiel Eisen, Nickel, Kobalt und deren Legierungen; und Biozide, Agrochemikalien und Pharmaka, wie zum Beispiel Fungizide.

Pigmentpasten, Beschichtungsstoffe, Druckfarben und/oder Drucklacke im Sinne der vorliegenden Erfindung können verschiedenste Produkte sein.

Es können zum Beispiel Füllstoffe, Pigmente und/oder Farbstoffe enthaltende Systeme sein. Als flüssiges Medium können sie organische Lösemittel und/oder Wasser enthalten, wie dies in Abhängigkeit von den verwendeten Bindemitteln als Stand der Technik bekannt ist. Weiterhin können als flüssige Medien auch Bindemittelkomponenten wie zum Beispiel Polyole angesehen werden.

Die Beschichtungsstoffe, Druckfarben und/oder Drucklacke müssen jedoch nicht notwendigerweise eine flüssige Phase enthalten, sondern können auch sogenannte Pulverlacke sein.

Ebenso können die Beschichtungsstoffe, Druckfarben und/oder Drucklacke die dem üblichen Stand der Technik entsprechende Zusatzstoffe enthalten, wie zum Beispiel Netzmittel, Verlaufshilfsmittel oder Entschäumer etc. und nach unterschiedlichen, dem Stand der Technik gemäßen Verfahren aushärten, vernetzen und/oder trocknen.

Beispiele für Beschichtungsstoffe im Sinne der vorliegenden Erfindung sind Farben, Lacke, Druckfarben und sonstige Beschichtungsstoffe, wie lösemittelhaltige Lacke und lösemittelfreie Lacke, Pulverlacke, UV-härtbare Lacke, Low-Solids, Medium-Solids, High-Solids, Automobillacke, Holzlacke, Einbrennlacke, 2K-Lacke, Metallbeschichtungsstoffe, Tonerzusammensetzungen. Weitere Beispiele für Beschichtungsstoffe werden in "Bodo Müller, Ulrich Poth, Lackformulierung und Lackrezeptur, Lehrbuch für Ausbildung und Praxis, Vincentz Verlag, Hannover (2003)" und "P.G. Garrat, Strahlenhärtung, Vincentz Verlag, Hannover (1996)" genannt.

Beispiele für Druckfarben und/oder Drucklacke im Sinne der vorliegenden Erfindung sind lösemittelbasierende Druckfarben, Flexodruckfarben, Tiefdruckfarben, Buchdruck- bzw. Hochdruckfarben, Offsetdruckfarben, Litho-Druckfarben, Druckfarben für den Verpackungsdruck, Siebdruckfarben, Drucktinten, wie Drucktinten für Tintenstrahldrucker, Ink Jet Tinte, Drucklacke, wie Überdrucklacke.

Beispiele für Druckfarben- und/oder Drucklackformulierungen werden in "E.W. Flick, Printing Ink and Overprint Varnish Formulations - Recent Developments, Noyes Publications, Park Ridge NJ, (1990)" und nachfolgende Auflagen genannt.

Die erfindungsgemäßen Dispergierharze können in Pigmentpassten, Beschichtungsstoffen, Druckfarben und/oder Drucklacken in einer Konzentration von 0,01 bis 90,0 Gew.-%, vorzugsweise von 0,5 bis 35 Gew.-% und besonders bevorzugt von 1 bis 25 Gew.-% mitverwendet werden. Gegebenenfalls können sie in Mischung mit Netz- und Dispergiermitteln des Standes der Technik eingesetzt werden.

### Ausführungsbeispiele:

Die Erfindung wird nachfolgend anhand von Ausführungsbeispielen näher erläutert.

### Edukte:

### Aminofunktionelle Polymere

Als aminofunktionelle Polymere wurden kommerzielle Polyethylenimine mit den in Tabelle 3 angegebenen Molmassen eingesetzt. Weitere eingesetzte aminofunktionelle Polymere sind PEI 1 und PEI 2, deren Herstellung nachfolgend beschrieben ist.

### Herstellung des vorvernetzten Polyethylenimins 1(PEI 1):

6 g (2 mmol) 1,6-Hexandioldiacrylat und 70 g an Polyethylenimine (MW 800 g/mol) wurden 12 Stunden bei 70 °C gerührt.

### Herstellung des vorvernetzten Polyethylenimins 2(PEI 2)

3 g (2 mmol) Pimelinsäure 0,1 g Tetrabutyltitanat und 45 g Polyethylenimine (MW 800 g/mol) wurden 4 Stunden bei 145 °C gerührt, es entstand ein bräunliches Produkt.

### Polyester

### Herstellung des Polyesters 1:

Eine Mischung von 500 g ε-Caprolacton, 73 g Laurinsäure und 0,5 g Tetrabutyltitanat wurden unter Inertgas (N₂) 6 Stunden bei 150 °C gerührt. Es entstand eine wachsartige Substanz mit einer Säurezahl von 36,0 mg KOH/g. Die mittlere Kettenlänge beträgt somit 11,7 monomere Wiederholungseinheiten.

Analog der Herstellung des Polyesters 1 wurden die in Tabelle 1 aufgezählten Polyester synthetisiert, wobei Zahlenwerte die molaren Anteile der Verbindungen wiedergeben.

**Tabelle 1:**

| Polyester | Struktur |
|---|---|
| 1 | Laurinsäure : ε-Caprolacton |
| | (1 : 12) |
| 2 | Stearinsäure : ε-Caprolacton |
| | (1 : 5) |
| 3 | Caprinsäure : ε-caprolacton : δ-Valerolacton |
| | (1 : 12 : 4) |
| 4 | Caprinsäure : ε-Caprolacton : δ-Valerolacton |
| | (1 : 8 : 4) |
| 5 | Ölsäure : ε-Caprolacton |
| | (1 : 4) |
| 6 | Ölsäure : ε-Caprolacton Hydroxydodecansäure-lacton |
| | (1 : 10 : 2) |
| 7 | Laurylalkohol : ε-Caprolacton : δ-Valerolacton |
| | (1 : 5 : 2) |

### Herstellung des acrylatmodifizierten Polyesters 8:

50 g Polyester 7 und 53 g n-Butylacrylat wurden in 50 ml Toluol vorgelegt und mit 300 ppm Hydrochinonmonomethylether und 0,5 g p-Toluolsulfonsäure versetzt.

Der Ansatz wurde so lange unter Magerlufteinleitung gerührt, bis die theoretische Menge des entstehenden Butanols mit Hilfe einer Destillationskollone entfernt wurde. Nach Entfernen des Lösemittels und des überschüssigen n-Butylacrylats erhielt man ein gelbliches Öl.

### Polyether:

Die Herstellung der folgenden Polyether erfolgte entsprechend den Angaben der DE-C-100 29 648. Die entstandenen modifizierten Polyether haben eine allgemeine Strukturformel (VI)

[R-O-(SO)ₑ(EO)_{f}(PO)_{g}(BO)ₕ]ᵢP(O)(OH)₃₋ᵢ (VI)

worin bedeuten
R = siehe Tabelle 2
SO = -CH₂-CH(Ph)-O- mit Ph = Phenylrest
EO = Ethylenoxid
PO = Propylenoxid
BO = Butylenoxid

**Tabelle 2:**

| Polyether | R | e | f | g | h | i |
|---|---|---|---|---|---|---|
| I | Isononyl- | 4 | 4 | 4 | 0 | 1,0 |
| II | Isononyl- | 1 | 5 | 0 | 0 | 1,0 |
| III | Isononyl- | 1 | 9 | 0 | 0 | 1,0 |
| IV | Butyl- | 3 | 0 | 0 | 2 | 2,5 |
| V | Butyl- | 2 | 0 | 4 | 0 | 1,0 |
| VI | Butyl- | 0 | 9 | 0 | 0 | 0,4 |

Dabei stellt die oben genannte Reihenfolge der monomeren Alkylenoxide keine Einschränkung hinsichtlich der resultierenden Polyetherstrukturen dar, sondern eine beispielhafte Aufzählung, wobei an dieser Stelle ausdrücklich darauf verwiesen sei, dass Polyether unter Verwendung der vorgenannten Monomeren sowohl statistisch als auch blockweise aufgebaut sein können. Dem Fachmann ist bekannt, dass der modifizierte Polyether (VI) mittels einer Phosphorylierungsreaktion hergestellt wurde und dass diese Reaktion statistisch verläuft. Der Wert i stellt das molare Verhältniss von Polyether zu Phosphatgruppen dar. Der Wert i kann zwischen 0 und 2,9 variieren.

### Erfindungsgemäße Dispergierharze

### Beispiel 1:

90 g des Polyesters 1 und 30 g des aminofunktionellen Polymers Lupasol® WF (25.000 g/mol)der BASF AG wurden unter N₂-Einleitung 6 Stunden bei 150 °C gerührt. Anschließend wurden bei 50 °C 13 g des Polyethers I unter Rühren zugegeben. Der Ansatz reagierte 3 Stunden bei 50 °C nach. Es entstand das Dispergierharz 1, ein wachsartiges Produkt.

### Beispiele 2 bis 18:

Beispiel 1 wurde unter Verwendung der in Tabelle 3 aufgeführten Edukte wiederholt.

**Tabelle 3:**

| Beispiel | Dispergierharz | Polyester (PES) | Menge [g] | Polyether (PE) | Menge [g] | PEI (Mn) | Menge [g] | Gew.-Verhältnis PES:PE:PEI |
|---|---|---|---|---|---|---|---|---|
| 1 | 1 | 1 | 90,0 | I | 7,2 | 25.000 | 7,9 | 11,4:0,9:1 |
| 2 | 2 | 1 | 416,3 | IV | 14,5 | 5.000 | 29,1 | 14,3:0,5:1 |
| 3 | 3 | 2 | 406,9 | I | 62,∈ | 25.000 | 75,0 | 5,4:0,8:1 |
| 4 | 4 | 3 | 352,2 | VI | 29,4 | 10.000 | 58,7 | 10,0:0,8:1 |
| 5 | 5 | 4 | 243,1 | VI | 42,9 | 10.000 | 14,3 | 9,0:1,6:1 |
| 6 | 6 | 4 | 156,5 | II | 36,4 | 10.000 | 36,4 | 4,3:1:1 |
| 7 | 7 | 4 | 97,0 | II | 15,4 | 10.000 | 7,7 | 12,6:2:1 |
| 8 | 8 | 4 | 463,6 | II | 33,7 | 5.000 | 25,9 | 17,9:1,3:1 |
| 9 | 9 | 4 | 61,6 | II | 9,2 | 5.000 | 6,1 | 10,1:1,5:1 |
| 10 | 10 | 4 | 266,0 | II | 14,0 | 1.200 | 20,0 | 13,3:0,7:1 |
| 11 | 11 | 4 | 327,6 | II | 79,9 | 1.200 | 42,0 | 7,8:1,9:1 |
| 12 | 12 | 4 | 661,0 | III | 33,0 | 10.000 | 66,1 | 10,0:0,5:1 |
| 13 | 13 | 8 | 409,9 | II | 19,9 | 10.000 | 39,8 | 10,3:0,5:1 |
| 14 | 14 | 4 | 409,9 | II | 19,9 | 5.000 | 39,8 | 10,3:0,5:1 |
| 15 | 15 | 4 | 409,9 | II | 19,9 | 1.200 | 39,8 | 10,3:0,5:1 |
| 16 | 16 | 5 | 51,7 | V | 18,8 | 10.000 | 12,5 | 4,1:1,5:1 |
| 17 | 17 | 5 | 288,8 | II | 10,1 | PEI 1 | 52,6 | 5,5:0,2:1 |
| 18 | 18 | 6 | 288,8 | II | 10,1 | PEI 2 | 20,2 | 14,3:0,5:1 |

### Nichterfindungsgemäße Vergleichsbeispiele:

### Herstellung der nicht erfindungsgemäßen Vergleichsbeispiele V 1:

103 g des Polyethers I und 30 g Lupasol WF der BASF AG wurden 6 Stunden bei 150 °C gerührt, es entstand ein wachsartiges Produkt, das im folgenden als Vergleichsbeispiel V 1 bezeichnet wird.

Vergleichsbeispiel V 2 stellt eine Mischung (50 gew.-% : 50 gew.-%) von Verbindung V 1 und dem aminofunktionellen Polyester Tego Dispers® 681 UV dar.

Als Dispergiermittel gemäß dem Stand der Technik wurden folgende Dispergiermittel V 3 bis V 6 mitverwendet:

### Handelsübliche aminofunktionelle Polyester:

Vergleichsbeispiel V 3 : Solsperse® 24000 (Lubrizol Corp.)
Vergleichsbeispiel V 4 : Solsperse^{®} 32000 (Lubrizol Corp.)
Vergleichsbeispiel V 5 : Solsperse^{®} 39000 (Lubrizol Corp.)
Vergleichsbeispiel V 6 : Tego Dispers^{®} 681 UV (Tego Chemie Service GmbH)

### Anwendungstechnische Beispiele:

### Prüfpigmente

Aus der Vielzahl der möglichen Feststoffe wurden folgende handelsübliche Pigmente ausgewählt: Raven® 450 (Columbia Chemicals Co.) und Spezialschwarz® 250 (Degussa AG) als Rußpigmente, Hostaperm® Violett P-RL (Clariant International Ltd.) und Irgalit® Gelb BAW (Ciba) als typische Buntpigmente.

### Prüflacke

Die Dispergierharze und Feststoffe wurden in folgenden Rezepturen für Beschichtungen, Druckfarben und/oder Drucklacken verglichen:

**Tabelle 4:**

| Rezeptur für UV-härtende Flexodruckfarbe | | |
|---|---|---|
| | org. Buntpigmente | Ruß-Pigmente |
| Rohstoffe | Gew.-% | Gew.-% |
| Ebecryl® 812 (UCB) | 25,75 | 25,08 |
| Ebecryl® 220 (UCB) | 6,57 | 6,40 |
| Laromer® TPGDA (BASF) | 29,02 | 28,27 |
| Laromer® TMPTA (BASF) | 16,27 | 15,85 |
| Dispergierharz bzw. Vergleichsbeispiel | 1,77 | 2,39 |
| Pigment | 11,79 | 13,40 |
| Airex® 920 (Tego) | 0,98 | 0,96 |
| Irgacure® 1300 (Ciba) | 5,89 | 5,74 |
| Darocure® 1173 (Ciba) | 1,96 | 1,91 |
| Summe | 100,00 | 100,00 |

Das Verhältnis von Pigmentmenge zur Menge des Dispergieradditivs wurde in allen Versuchen pigmentabhängig konstant gehalten. Das Dispergieradditiv-Pigmentverhältnis war bei Ruß-Pigmenten 17,8 % Additiv auf Pigment und bei organischen Buntpigmenten 15 % Additiv auf Pigment.

**Tabelle 5:**

| Rezeptur für weißen, UV-härtbaren Abtönlack | |
|---|---|
| Rohstoff | Ges.-% |
| Ebecryl® 812 (UCB) | 30,0 |
| Ebecryl® 220 (UCB) | 8,6 |
| Laromer® TPGDA (BASF) | 19,4 |
| Laromer® TMPTA (BASF) | 12,9 |
| Kronos® 1075 (KRONOS Int.) | 25,7 |
| Irgacure® 819 (Ciba) | 1,4 |
| Darocure® 1173 (Ciba) | 1,4 |
| Airex® 920 (Tego) | 0,6 |

### Herstellung:

Die Rezepturbestandteile werden gemäß den vorstehenden Rezepturen in 250 ml Schraubdeckelgläser eingewogen und mit Glasperlen (100 g Glasperlen auf 100 g Mahlgut) versetzt. Die verschlossenen Gläser werden anschließend in einem Skandex-Mischer (Skandex; Typ: BA-S20) für 2 h bei 620 U/min gerüttelt, wobei Temperaturen bis zu 50 °C erreicht werden können. Anschließend werden die Glasperlen mit Hilfe eines Siebes von der dispergierten Druckfarbe getrennt.

### Abgetönte UV-härtbare Flexodruckfarbe:

Zur besseren Beurteilung der Farbstärken wurde die UV-härtbare Flexodruckfarbe mit dem weißen Abtönlack abgemischt. Die Abmischungen wurden im Verhältnis 20 : 1 durchgeführt (41,67 g Weißpigment zu 1 g org. Buntpigment; und 35,71 g Weißpigment zu 1 g Ruß-Pigment). Anschließend wird die Mischung in einem Universalrüttler (Hausschild Engineering, DAC 150 Dual Asymmetric Centrifuge) 1 min homogenisiert.

### Applikation:

Die abgetönten UV-härtbaren Flexodruckfarben wurden mit einem Spiralrakel (24 µm) auf weißem Karton (Leneta) aufgerakelt. Die Trocknung erfolgte mit Hilfe einer 120 W/cm Quecksilber-Mitteldruck-Dampflampe (Beltron GmbH, Beltron UV-Strahler). Dabei betrug die Geschwindigkeit des Transportbandes 8 m/min.

### Prüfmethoden:

Um die Leistungsfähigkeit der Dispergiermittel zu bewerten, wurden die erreichten Farbstärken, Viskosität und das rheologische Verhalten zusammengetragen.

### Viskositätsmessung:

Die Bestimmung des rheologieschen Verhaltens der so hergestellten UV-härtbaren Flexodruckfarbe erfolgt mit Hilfe eines Rotationsviskosimeters. Als Messsystem wurde ein Platte/Kegel-System gewählt (Euro Physics, Rheo 2000 RC20, 45 µm, Winkel 1°; 25 °C Meßtemperatur).

Dabei wurde folgendes Geschwindigkeitsgefälle gewählt:
10 bis 90 s⁻¹ in 30 s
100 bis 1.000 s⁻¹ in 40 s
1.000 bis 1.000 s⁻¹ in 30 s
1.000 bis 100 s⁻¹ in 40 s
100 bis 10 s⁻¹ in 30 s
90 bis 10 s⁻¹ in 30 s

Zum Vergleich der Proben untereinander wurden die Viskositätswerte herangezogen, die bei dem niedrigen Geschwindigkeitsgefälle von 10 s⁻¹ der Hinkurve gemessen wurden, da hier die größten Unterschiede zu beobachten sind.

### Farbmessung:

Die Farbmessung der Weißabmischung (24 µm-Schichtdicke auf Leneta-Karton) erfolgte mit einem Gerät der Firma X-Rite (Typ: X-Rite SP 60). Von allen Proben wurden die sogenannten L*a*b*-Werte gemäß des CIE-Lab-Systems (CIE = Commission Internationale de l'Eclairage) bestimmt. Das CIE-Lab-System ist als ein dreidimensionales System zur quantitativen Beschreibung der Farborte nützlich. Darin sind auf einer Achse die Farben Grün (negative a*-Werte) und Rot (positive a*-Werte) aufgetragen, auf der dazu im rechten Winkel angeordneten Achse die Farben Blau (negative b*-Werte) und Gelb (positive b*-Werte). Der Wert C* setzt sich aus a* und b* wie folgt zusammen: C* = (a*² + b*²)^{0,5} und wird zur Beschreibung von violetten Farborten verwandt. Die beiden Achsen kreuzen sich im Unbuntpunkt. Die vertikale Achse (Unbuntachse) ist maßgebend für die Helligkeit von Weiß (L = 100) bis Schwarz (L = 0). Mit dem CIE-Lab-System können nicht nur Farborte, sondern auch Farbabstände durch die Angabe der drei Koordinaten beschrieben werden.

### Beispiel 19 bis 37:

Die Dispergierharze 1 bis 19 wurden in UV-härtbarer Flexodruckfarbe mit dem Rußpigment Spezialschwarz® 250 wie oben beschrieben getestet. Die Ergebnisse sind in Tabelle 6 wiedergegeben und zeigen, dass die erfindungsgemäßen Dispergierharze geringere L*-Werte aufwiesen als die Vergleichsverbindungen. Gewünscht sind hier geringe L*-Werte (Helligkeitswert). Die angegebenen Werte in den Ergebnistabellen sind jeweils Mittelwerte aus drei Messungen.

**Tabelle 6:**

| Vergleich in UV-härtbarer Flexodruckfarbe mit Pigment Spezialschwarz® 250 | | |
|---|---|---|
| Beispiel | Dispergierharz | L* |
| 19 | 1 | 50,25 |
| 20 | 2 | 50,03 |
| 21 | 3 | 50,71 |
| 22 | 4 | 50,84 |
| 23 | 5 | 50,24 |
| 24 | 6 | 50,83 |
| 25 | 7 | 50,56 |
| 26 | 8 | 50,93 |
| 27 | 9 | 50,72 |
| 28 | 10 | 50,76 |
| 29 | 11 | 50,14 |
| 30 | 12 | 50,35 |
| 31 | 13 | 50,48 |
| 32 | 14 | 50,90 |
| 33 | 15 | 50,50 |
| 34 | 16 | 50,59 |
| 35 | 17 | 50,65 |
| 36 | 18 | 51,09 |
| 37 | 14 + 18; (50 Ges.-% : 50 Gew.-%) | 51,23 |
| Vergleichsbeispiel | V 1 | 52,31 |
| Vergleichsbeispiel | V 2 | 51,69 |

### Beispiel 38:

**Tabelle 7:**

| Vergleich in UV-härtbarer Flexodruckfarbe mit Pigment Raven® 450 | | |
|---|---|---|
| Raven® 450 | L* | Viskosität in mPas (10 1/s; 25 °C) |
| Nullprobe | 82,24 | 2491 |
| Vergleichsbeispiel V 1 | 73,02 | 1603 |
| Vergleichsbeispiel V 4 | 66,45 | 1367 |
| Vergleichsbeispiel V 5 | 70,07 | 1587 |
| Vergleichsbeispiel V 6 | 65,89 | 1355 |
| Dispergierharz 1 | 63,96 | 959 |

**Tabelle 8:**

| Vergleich in UV-härtbarer Flexodruckfarbe mit Pigment Spezialschwarz® 250 | | |
|---|---|---|
| Spezialschwarz® 250 | L* | Viskosität in mPas (10 1/s; 25 °C) |
| Nullprobe | 59,18 | 962 |
| Vergleichsbeispiel V 1 | 52,31 | 901 |
| Vergleichsbeispiel V 4 | 50,50 | 348 |
| Vergleichsbeispiel V 5 | 50,57 | 316 |
| vergleichsbeispiel V 6 | 50,49 | 304 |
| Dispergierharz 1 | 50,25 | 261 |

Gewünscht sind hier geringe L* (Helligkeitswerte) und eine geringe Viskosität bei kleinen Scherbelastungen. Es zeigt sich, dass die erfindungsgemäß mitverwendeten Dispergierharze gegenüber den nicht erfindungsgemäßen Vergleichsbeispielen geringere L*-Werte und eine geringere Viskosität bei gegebenem Schergefälle zeigen.

Die positiven Eigenschaften des erfindungsgemäß verwendeten Dispergierharzes beschränken sich nicht nur auf Schwarzpigmente, sondern erstrecken sich auch auf die anderen üblicherweise dem Stand der Technik mitverwendeten Feststoffe. Es ist dem Fachmann bekannt, dass insbesondere Gelbpigmente und Violettpigmente schwierig zu dispergieren sind. Daher wird im Folgenden als Beispiel für die universelle Anwendbarkeit der Dispergierharze das Gelbpigment Irgalite® Yellow BAW (Ciba) und Hostaperm® Violett P-RL (Clariant International Ltd.) verwendet.

**Tabelle 9:**

| Vergleich in UV-härtbarer Flexodruckfarbe mit Pigment Hostaperm® Violett P-RL | | |
|---|---|---|
| Hostaperm® Violett P-RL | C* | Viskosität in mPas (10 1/s; 25 °C) |
| Nullprobe | 34,82 | 1061 |
| Vergleichsbeispiel V 1 | 35,04 | 989 |
| Vergleichsbeispiel V 4 | 37,25 | 583 |
| Vergleichsbeispiel V 5 | 37,47 | 666 |
| Vergleichsbeispiel V 6 | 37,32 | 592 |
| Dispergierharz 1 | 37,77 | 523 |

Gewünscht sind hier hohe C*-Werte (Violett-Werte) und geringere Viskosität bei kleinen Scherbelastungen. Es zeigt sich, dass das erfindungsgemäß mitverwendete Dispergierharz gegenüber den nicht erfindungsgemäßen Vergleichsbeispielen eine geringe Viskosität und einen höheren C*-Wert zeigt.

**Tabelle 10:**

| Vergleich in UV-härtbarer Flexodruckfarbe Irgalite® Yellow BAW | | |
|---|---|---|
| Irgalite® Gelb BAW | b* | Viskosität in mPas (10 1/s; 25 °C) |
| Nullprobe | 26,05 | 3084 |
| Vergleichsbeispiel V 1 | 37,94 | 2021 |
| Vergleichsbeispiel V 4 | 49,04 | 1447 |
| Vergleichsbeispiel V 5 | 46,97 | 1843 |
| Vergleichsbeispiel V 6 | 48,98 | 1458 |
| Dispergierharz 1 | 49,70 | 1457 |

Gewünscht sind hier hohe b*-Werte (gelb-Werte) und geringe Viskosität bei kleinen Scherbelastungen. Es zeigt sich, dass das erfindungsgemäß verwendete Dispergierharz gegenüber den nicht erfindungsgemäßen Vergleichsbeispielen des Standes der Technik eine geringere Viskosität und einen höheren b*-Wert zeigt.

### Beispiel 39:

Des Weiteren sollen die erfindungsgemäßen Dispergierharze 1 bis 18 der Tabelle 3 mit den nicht erfindungsgemäßen Vergleichsbeispielen in einer bindemittelhaltigen Anreibung von Pigmenten verglichen werden, die gemäß der Mischung aus 50 g Polyol, 25 g Dispergiermittel (erfindungsgemäß bzw. nicht erfindungsgemäß) und 25 g Ruß auf ihre Herstellbarkeit überprüft werden. Die Mischung der drei vorgenannten Komponenten erfolgt dabei zusammen mit 100 g Glasperlen in einem 250 g Glas für 8 Stunden im Skandex.

Typische Polyole, die hier zum Einsatz kommen sind von einer Vielzahl von Herstellern erhältlich, wie z.B. von den Firmen Bayer, Dow, BASF u.a. und können grundsätzlich über ein mittleres Molekulargewicht von 1.000 bis 8.000 g/mol mit einer Hydroxylzahl im Bereich von 15 bis 70 beschrieben werden, wobei darüber mit dem entsprechenden Härter und Polyol/Härter-Verhältnis die technischen Eigenschaften (chemische Resistenz, Härte, Flexibilität des Materials usw.) einstellbar sind.

Derartige polyolbasierte Pigmentpasten können im nachhinein in einer Vielzahl von Anwendungen ihre Anwendung finden. Dabei sind die Pasten nicht nur auf die Verwendung in Lacken, Farben und Beschichtungsstoffen beschränkt, sondern können beispielsweise auch für glasfaserverstärkte Kunststoffe, Spritzgussanwendungen, Polyurethanschäume und Kunststoffbauteile Verwendung finden. Die hier verwendeten Polyole sind Polyetherpolyole. Allerdings ist die Verwendung der erfindungsgemäß beanspruchten Dispergierharze/-mittel keineswegs darauf beschränkt, sondern es sind auch andersartige Polymere, die zusammen mit den erfindungsgemäßen Verbindungen zur Anreibung von Feststoffen als flüssiges Medium genutzt werden können, in einer besonderen Ausführungsform dieses Patents mit beansprucht. Als weitere Beispiele für derartige Polymere sind neben Polyetherpolyolen auch Polyesterpolyole nutzbar, oder Feststoffe jeder Art können auch in anderen Systemen wie nitrocellulose als Anreibematrix mitverwendet werden.

Für die Ruße kommen eine Vielzahl von Produkten in Frage, wobei hier beispielhaft die Typen Monarch®570 (Fa. Cabot), Monarch®870 oder Printex®60 (Fa. Degussa) genannt seien, die aber keinerlei Beschränkung auf die selben hinsichtlich der Wirkung der erfindungsgemäßen Verbindungen darstellen und das Wirkfenster der erfindungsgemäßen Verbindungen auch nur am Beispiel von Ruß erläutert wird, jedoch nicht nur auf diese Pigmentgruppe beschränkt ist.

Es wird die Herstellbarkeit der Pasten in Form der viskosität beurteilt und die Pasten gegebenenfalls rheologisch vermessen.

Die Bestimmung des rheologischen Verhaltens erfolgt mit Hilfe eines Rotationsviskosimeters der Firma Haake, Typ Rheostress1, wobei ein Platte/Kegel-System gewählt wird und der Prüfkörper HC 35. Die Messungen werden bei 23 °C unter Verwendung des folgenden Programms durchgeführt:
0,1 bis 10 l/s in 10 s, 10 Messpunkte
10 bis 1.000 l/s in 50 s, 50 Messpunkte
1.000 bis 10 l/s in 50 s, 50 Messpunkte
10 bis 0,1 l/s in 10 s, 10 Messpunkte

Die Beurteilung der Feinteiligkeit der Pigmentpasten wird mittels eines Grindometers von Byk Gardner vorgenommen und in Form von Mikrometern angegeben. Es handelt sich dabei um die Bestimmungsmethode nach DIN EN 21524: 1991-09.

Pasten, die eine Viskosität von weniger als 5.000 mPas im Bereich niedriger Scherraten aufweisen und deren Feinteiligkeit unterhalb der 12 µm liegt, werden für die Einfärbung der folgenden Lacksysteme (siehe Tabellen 11 und 12) genutzt.

**Tabelle 11:**

| Weißer, zweikomponentiger Polyurethanlack | |
|---|---|
| Rohstoffe | Einwaage in g |
| Bindemittel Desmophen® AVPLS 2350 (Fa. Bayer AG) | 462,0 |
| Titandioxid KRONOS®2310 (Fa. KRONOS Int.) | 369,6 |
| Xylol | 25,0 |
| Methoxypropylacetat (MPA) | 25,0 |
| Butylacetat (BuAc) | 25,0 |
| Vorgenannte fünf Komponenten werden in einem 2 1 Dispergiertopf zusammen mit 700 g Perlen für 2 Stunden bei 10 m/s dispergiert und die übrigen Komponenten danach zugegeben | |
| Katalysator Tegokat 219 (81 %ig in Xylol) (Goldschmidt TIB GmbH) | 13,4 |
| Lösemittelgemisch Xylol/MPA/BuAc 1:1:1 | 76,2 |

Für die Aushärtung des Systems werden nun 150 g Stammlack mit 25,5 g Härterkomponente in Form von Desmodur® N 3390 BA (Bayer) gemischt. Diesem Gemisch werden 3,51 g der oben beschriebenen bindemittelhaltigen Rußanreibung zugegeben und die resultierenden Helligkeitswerte L* (siehe Tabelle 12) notiert. Die Aushärtung des mit 150 µm mittels Rakel applizierten Systems erfolgt, indem nach 10-minütiger Ablüftzeit bei Raumtemperatur das System anschließend 30 Minuten forciert bei 60 °C getrocknet wird.

**Tabelle 12:**

| Weißer Alkydharzlack | |
|---|---|
| Rohstoffe | Einwaage in g |
| Bindemittel AlkydalF®681 (75 %ig in Testbenzin) (Fa. Bayer AG) | 280,0 |
| Titandioxid KRONOS®2065 (Fa. KRONOS Int.) | 300,0 |
| Lösemittel Testbenzin | 90,0 |
| Die vorgenannten drei Komponenten werden dabei bei 18 m/s in einem Dispergiertopf für 30 Minuten unter Kühlung dispergiert und anschließend mit den folgenden Inhaltsstoffen unter Rühren vermischt | |
| Bindemittel AlkydalF®681 (75 %ig in Testbenzin)(Fa. Bayer AG) | 255,8 |
| Trockner Nuodex Ca (5 %) (Fa. Elementis Specialties, Inc.) | 2,0 |
| Trockner Nuodex Zr (12 %) (Fa. Elementis Specialties, Inc.) | 3,0 |
| Trockner Nuodex Co (6 %) (Fa. Elementis Specialties, Inc.) | 3,2 |
| Hautverhinderungsmittel Ascinin R 55 (Fa. Borchers) | 0,8 |

Der resultierende weiße Alkydharzlack kann anschließend unter Verwendung der hergestellten Rußanreibungen eingefärbt werden und die in Tabelle 13 aufgeführten Ergebnisse resultieren dabei aus einer Mischung von 25,0 g Weißlack und 0,5 g 25 %iger Rußpaste auf Polyolbasis.

**Tabelle 13:**

| Herstellbarkeit der polyolbasierten Rußpasten (Pigment Printer®60) und L*-Werte der eingefärbten 2K-PU-Lacke | | | |
|---|---|---|---|
| Dispergierharz | Rußpaste (i.O./ n.i.O) | Feinteiligkeit (µm) | Helligkeitswert L* |
| Vergleichsbeispiel V 3 | n.i.O. | entfällt | entfällt |
| Vergleichsbeispiel V 4 | n.i.O. | entfällt | entfällt |
| Vergleichsbeispiel V 5 | n.i.O. | entfällt | entfällt |
| Vergleichsbeispiel V 6 | n.i.O. | entfällt | entfällt |
| 1 | i.O. | < 10 µm | 56,8 |
| 2 | i.O. | < 12 µm | 55,4 |
| 5 | i.O. | < 10 µm | 54,2 |
| 6 | i.O. | < 8 µm | 54,1 |
| 12 | i.O. | < 12 µm | 55,8 |
| 18 | i.O. | < 10 µm | 54,7 |

| | | | |
|---|---|---|---|
| n.i.O.= nicht in Ordnung; i.O.= in Ordnung. | | | |

Es wird deutlich, dass die nichterfindungsgemäßen Verbindungen überhaupt nicht die Herstellung einer 25 %igen Rußanreibung in Polyol erlauben, was durch die Bezeichnung n.i.O. (nicht in Ordnung) verdeutlicht wird. Ein Einfärben des Lackes entfällt daher. Die erfindungsgemäßen Dispergierharze haben dagegen keinerlei Problem die Viskosität bei der Anreibung derartig zu senken, dass Pasten resultieren, die deutlich unterhalb 5.000 mPas liegen und mit den entsprechenden Feinteiligkeiten auch die gute Ausreibung der Ruße ersichtlich wird. Die äußerst niedrigen L*-Werte für die mit den erfindungsgemäßen Verbindungen hergestellten 2K-PU-Systeme sind deshalb auch unübertroffen.

**Tabelle 14:**

| Einfärbung des Alkydharzlackes mit bindemittelhaltigen Rußpasten | |
|---|---|
| Dispergierharz | Helligkeitswert L* |
| 1 | 59,8 |
| 2 | 60,7 |
| 5 | 61,0 |
| 7 | 59,7 |
| 9 | 60,3 |
| 15 | 60,8 |
| 18 | 61,2 |

Wie bereits in Tabelle 12 deutlich wurde, zeigen die erfindungsgemäßen Verbindungen ein auffallend anderes Eigenschaftsprofil gegenüber den nicht erfindungsgemäßen Vergleichsbeispielen, der Art, dass nur mit erfindungsgemäßen Verbindungen die Herstellung von niedrigviskosen 25 %igen Rußpasten möglich ist, wodurch in Tabelle 13 natürlich nur Helligkeitswerte für die auf Basis der erfindungsgemäßen Verbindungen eingefärbten Alkydlacke benennbar sind.

Mit dem Vergleichsbeispiel V 5 lässt sich ebenfalls keine 25 %ige Rußpaste in Polyol fertigen, jedoch eine Paste mit 19 % Ruß gemäß der Mischung 50 g Polyol/15 g Ruß/15 g Dispergierharz ist gerade noch akzeptabel. Die daraus resultierenden L*-Werte, für die Einfärbung der Lacke werden deshalb hier aufgeführt:

| | |
|---|---|
| 2K-PU-Lack: | L* = 60,1 |
| Alkydharzlack : | L* = 70,3 |

machen aber nur um so deutlicher, welche signifikanten Vorteile die erfindungsgemäßen Verbindungen als Dispergierharze bieten, sowohl bei der Herstellung von Pasten, hier gezeigt am Beispiel von polyolbasierten Rußpasten als einem der schwierigsten Anreibesysteme und anhand der Verwendung solcher Pasten für verschiedene hydrophobe Lacksysteme.

Das Diagramm 1 zeigt die niedrigen Viskositäten einiger erfindungsgemäßer Beispiele als 25 %ige polyolbasierte Rußpasten. Im Vergleich dazu wird die Viskosität der einzigen herstellbaren 19 %igen Rußpaste des Vergleichsbeispiels V 5 aufgeführt, welche bereits deutlich höher ist und in einer Produktion nicht händelbar wäre. 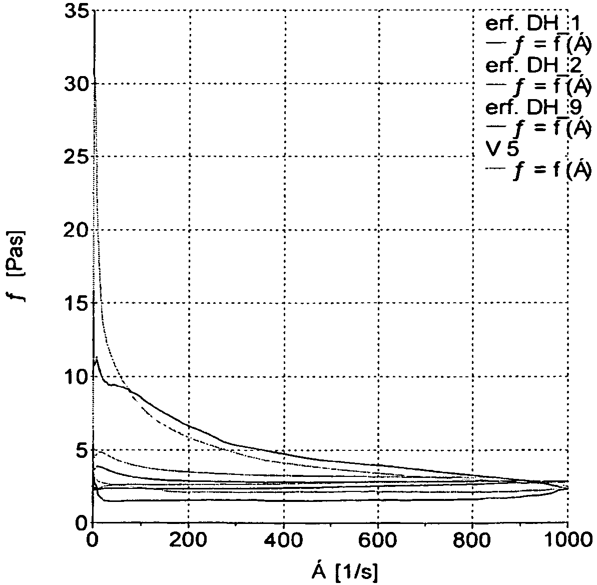 erf.DH = erfindungsgemäße Dispergierharze

### Diagramm 1:

### Vergleich von Viskositätsprofilen von polyolbasierten Rußpasten

Bei einer Scherrate 50[1/s] ergeben sich folgende Viskositätsreihenfolge der Pasten: Vergleichbeispiel 5 (höchste Viskosität), Dispergierharz 2, Dispergierharz 9, Dispergierharz 1 (niedrigste Viskosität).

Im Diagramm 1 sind sowohl Viskositätskurven mit steigendem Schergefälle (0-1000[1/s]), sowie mit sinkendem Schergefälle (1000-0 [1/s]) wiedergegeben (sogenannte Rückkurven, die eine Beurteilung der Thixotropie zulassen). Die Dispergierharze 9 und 1 sind deshalb nicht nur wegen des niedrigeren Viskositätsniveaus mit nahezu newtonischem Verlauf, sondern auch wegen der kaum vorhandenen Thixotropie, als besonders interessant zu bewerten.

## Patentansprüche

1. Dispergierharze, erhältlich durch die teilweise oder vollständige Umsetzung von
A) einem oder mehreren aminofunktionellen Polymeren mit
B) einem oder mehreren Polyestern der allgemeinen Formeln (I) / (Ia)
T-C(O)-[O-A-C(O)]ₓ-OH (I)
T-O-[C(O)-A-O-]_{y}-Z (Ia)
und
C) einem oder mehreren Polyethern der allgemeinen Formel (II)/(IIa)
T-C(O)-B-Z (II)
T-O-B-Z (IIa)
worin
T ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
A mindestens ein zweiwertiger Rest ist, ausgesucht aus der Gruppe der linearen, verzweigten, cyclischen und aromatischen Kohlenwasserstoffe,
Z mindestens ein Rest ist, ausgesucht aus der Gruppe der Sulfonsäuren, Schwefelsäuren, Phosphonsäuren, Phosphorsäuren, Carbonsäuren, Isocyanate, Epoxide, insbesondere der Phosphorsäure und (Meth)acrylsäure,
B ein Rest der allgemeinen Formel (III) ist
-(C₁H₂₁O)ₐ-(CₘH₂ₘO)_{b}-(CₙH₂ₙO)_{c}-(SO)_{d}- (III)
SO = -CH₂-CH(Ph)-O- mit Ph = Phenylrest, a,b,c unabhängig voneinander Werte von 0 bis 100 sind,
mit der Maßgabe, dass die Summe aus a + b + c ≥ 0, vorzugsweise 5 bis 35, insbesondere 10 bis 20 ist, mit der Maßgabe, dass die Summe aus a + b + c + d > 0,
d ≥ 0, vorzugsweise 1 bis 5 ist,
1,m,n unabhängig voneinander ≥ 2, vorzugsweise 2 bis 4 ist,
x,y unabhängig voneinander ≥ 2 sind.

2. Dispergierharz gemäß Anspruch 1, **dadurch gekennzeichnet, dass** das aminofunktionelle Polymer mindestens eine Verbindung ist ausgesucht aus der Gruppe der aminofunktionellen Polyaminosäuren, aminofunktionellen Silicone, Polyamidoamine, Polyallylamine und Poly(N-alkyl)allylamine Polyvinylamine, Polyalkylenimine.

3. Dispergierharz gemäß Anspruch 1, **dadurch gekennzeichnet, dass** das aminofunktionelle Polymer durch Reaktion eines Teils der Aminogruppen mit einer oder mehreren mehrfunktionellen Verbindungen ausgesucht aus der Gruppe der Isocyanate, Carbonsäuren, (Meth)acrylate und Epoxide vernetzt ist.

4. Dispergierharz gemäß mindestens einem der Ansprüche 1 bis 3, **dadurch gekennzeichnet, dass** das aminofunktionelle Polymer ein Molekulargewicht von 400 g/mol bis 600.000 g/mol aufweist.

5. Dispergierharz gemäß mindestens einem der Ansprüche 1 bis 4, **dadurch gekennzeichnet, dass** die Polyestergruppen durch ringöffnende Polymerisation aus einem oder mehreren Lactonen, ausgesucht aus der Gruppe β-Propiolacton, β-Butyrolacton, γ-Butyrolacton, 3,6-Dimethyl-1,4-dioxan-2,5-dion, δ-Valerolacton, γ-Valerolacton, ε-Caprolacton, γ-Caprolacton, 4-Methylcaprolacton, 2-Methylcaprolacton, 5-Hydroxydodecansäurelacton, 12-Hydroxydodecansäurelacton, 12-Hydroxy-9-octadecensäure, 12-Hydroxyoctadecansäure erhaltwerden.

6. Dispergierharz gemäß mindestens einem der Ansprüche 1 bis 5, **dadurch gekennzeichnet, dass** die Polyestergruppen ein mittleres Molekulargewicht Mₙ von 100 bis 5.000 g/mol aufweisen.

7. Dispergierharz gemäß mindestens einem der Ansprüche 1 bis 6, **dadurch gekennzeichnet, dass** die Polyetherreste unabhängig voneinander Reste sind ausgesucht aus der Gruppe Ethylenoxid, Propylenoxid, Butylenoxid, Dodecenoxid, Tetradecenoxid, 2,3-Dimethyloxiran, Cyclopentenoxid, 1,2-Epoxypentan, 2-Isopropyloxiran, Glycidylmethylester, Glycidylisopropylester, Epichlorhydrin, 3-Methoxy-2,2-di-methyloxiran, 8-oxabicyclo[5.1.0]octan, 2-Pentyloxiran, 2-Methyl-3-phenyloxiran, 2,3-Epoxypropylbenzol, 2-(4-Fluorophenyl)oxiran, sowie deren reine Enantiomerenpaare oder Enantiomerengemische.

8. Verwendung der Dispergierharze gemäß mindestens einem der Ansprüche 1 bis 7 als Dispergiermittel für Feststoffe zur Herstellung von bindemittelhaltigen oder bindemittelfreien Pigmentpasten, Beschichtungsstoffen, Druckfarben und/oder Drucklacken.

9. Dispersionen eines Feststoffes in einem flüssigen Medium, enthaltend mindestens ein Dispergierharz gemäß einem oder mehreren der Ansprüche 1 bis 7.

## Claims

1. Dispersing resins obtainable by full or partial reaction of
A) one or more amino-functional polymers with
B) one or more polyesters of the general formulae (I)/(Ia)
T-C(O)-[O-A-C (O)]ₓ-OH (I)
T-O-[C(O)-A-O-]_{y}-Z (Ia)
and
C) one or more polyethers of the general formula (II)/(IIa)
T-C(O)-B-Z (II)
T-O-B-Z (IIa)
in which
T is a hydrogen and/or a substituted or unsubstituted, linear or branched aryl, arylalkyl, alkyl or alkenyl radical having 1 to 24 carbon atoms,
A is at least one divalent radical selected from the group of linear, branched, cyclic, and aromatic hydrocarbons,
Z is at least one radical selected from the group of sulfonic acids, sulfuric acids, phosphonic acids, phosphoric acids, carboxylic acids, isocyanates, epoxides, particularly of phosphoric acid and (meth)acrylic acid,
B is a radical of the general formula (III)
-(C₁H₂₁O)ₐ-(CₘH₂ₘO)_{b}-(CₙH₂ₙO)_{c}-(SO)_{d}- (III)
SO = -CH₂-CH(Ph)-O- where Ph = phenyl radical,
a, b, and c independently of one another are values from 0 to 100,
with the proviso that the sum of a + b + c ≥ 0, preferably 5 to 35, in particular 10 to 20, with the proviso that the sum of a + b + c + d > 0,
d ≥ 0, preferably 1 to 5,
1, m, and n independently of one another are ≥ 2, preferably 2 to 4, and
x and y independently of one another are ≥ 2.

2. Dispersing resin according to Claim 1, **characterized in that** the amino-functional polymer is at least one compound selected from the group of amino-functional polyamino acids, amino-functional silicones, polyamidoamines, polyallylamines and poly(N-alkyl)allylamines, polyvinylamines, and polyalkyleneimines.

3. Dispersing resin according to Claim 1, **characterized in that** the amino-functional polymer is crosslinked by reaction of some of the amino groups with one or more polyfunctional compounds selected from the group of isocyanates, carboxylic acids, (meth)acrylates, and epoxides.

4. Dispersing resin according to at least one of Claims 1 to 3, **characterized in that** the amino-functional polymer has a molecular weight of 400 g/mol to 600 000 g/mol.

5. Dispersing resin according to at least one of Claims 1 to 4, **characterized in that** the polyester groups are obtained by ring-opening polymerization of one or more lactones selected from the group of β-propiolactone, β-butyrolactone, γ-butyrolactone, 3,6-dimethyl-1,4-dioxane-2,5-dione, δ-valerolactone, γ-valerolactone, ε-caprolactone, γ-caprolactone, 4-methylcaprolactone, 2-methylcaprolactone, 5-hydroxydodecanolactone, 12-hydroxydodecanolactone, 12-hydroxy-9-octa-decenoic acid, 12-hydroxyoctadecanoic acid.

6. Dispersing resin according to at least one of Claims 1 to 5, **characterized in that** the polyester groups have an average molecular weight Mₙ of 100 to 5000 g/mol.

7. Dispersing resin according to at least one of Claims 1 to 6, **characterized in that** the polyether radicals are, independently of one another, selected from the group of ethylene oxide, propylene oxide, butylene oxide, dodecene oxide, tetradecene oxide, 2,3-dimethyloxirane, cyclopentene oxide, 1,2-epoxypentane, 2-isopropyloxirane, glycidyl methyl ester, glycidyl isopropyl ester, epichlorohydrin, 3-methoxy-2,2-dimethyloxirane, 8-oxa-bicyclo[5.1.0]octane, 2-pentyloxirane, 2-methyl-3-phenyloxirane, 2,3-epoxypropylbenzene, 2-(4-fluorophenyl)oxirane, and also their pure enantiomer pairs or enantiomer mixtures.

8. Use of the dispersing resins according to at least one of Claims 1 to 7 as dispersant for solids for producing binder-containing or binder-free pigment pastes, coating materials, printing inks and/or print varnishes.

9. Dispersions of a solid in a liquid medium, comprising at least one dispersing resin according to one or more of Claims 1 to 7.

## Revendications

1. Résines de dispersion, pouvant être obtenues par la mise en réaction partielle ou totale de
A) un ou plusieurs polymères à fonction amino avec
B) un ou plusieurs polyesters de formules générales (I) / (Ia)
T-C(O)-[O-A-C(O)]ₓ-OH (I)
T-O-[C(O)-A-O-]_{y}-Z (Ia)
et
C) un ou plusieurs polyéthers de formule générale (II) / (IIa)
T-C(O)-B-Z (II)
T-O-B-Z (IIa)
dans lesquelles
T est un atome d'hydrogène et/ou un radical aryle, arylalkyle, alkyle ou alcényle linéaire ou ramifié, éventuellement substitué, ayant de 1 à 24 atomes de carbone,
A est au moins un radical divalent, choisi dans le groupe des hydrocarbures linéaires, ramifiés, cycliques et aromatiques,
Z est au moins un radical choisi dans le groupe des acides sulfoniques, acides sulfuriques, acides phosphoniques, acides phosphoriques, acides carboxyliques, isocyanates, époxydes, en particulier de l'acide phosphorique et de l'acide (méth)acrylique,
B est un radical de formule générale (III)
-(C₁H₂₁O)ₐ-(CₘH₂ₘO)_{b}-(CₙH₂ₙO)_{c}-(SO)_{d}- (III)
SO = -CH₂-CH(Ph)-O- où Ph = radical phényle,
a,b,c ont chacun indépendamment des valeurs de 0 à 100,
étant entendu que la somme de a + b + c est ≥ 0, de préférence vaut de 5 à 35, en particulier de 10 à 20, étant entendu que la somme de a + b + c + d est > 0 d vaut ≥ 0, de préférence 1 à 5,
1, m, n valent chacun indépendamment ≥ 2, de préférence de 2 à 4,
x,y valent indépendamment l'un de l'autre ≥ 2.

2. Résine de dispersion selon la revendication 1, **caractérisée en ce que** le polymère à fonction amino est au moins un composé choisi dans le groupe des poly(aminoacides)s à fonction amino, silicones à fonction amino, polyamidoamines, polyallylamines et poly(N-alkyl)allylamines, polyvinylamines, poly(alkylène-imine)s.

3. Résine de dispersion selon la revendication 1, **caractérisée en ce que** le polymère à fonction amino est réticulé par réaction d'une partie des groupes amino avec un ou plusieurs composés polyfonctionnels choisis dans le groupe des isocyanates, acides carboxyliques, (méth)acrylates et époxydes.

4. Résine de dispersion selon au moins l'une quelconque des revendications 1 à 3, **caractérisée en ce que** le polymère à fonction amino présente une masse moléculaire de 400 g/mole à 600 000 g/mole.

5. Résine de dispersion selon au moins l'une quelconque des revendications 1 à 4, **caractérisée en ce que** les groupes polyesters sont obtenus par polymérisation avec ouverture de cycle d'une ou plusieurs lactones, choisies dans le groupe constitué par la β-propiolactone, la β-butyrolactone, la γ-butyrolactone, la 3,6-diméthyl-1,4-dioxane-2,5-dione, la δ-valérolactone, la γ-valérolactone, l'ε-caprolactone, la γ-caprolactone, la 4-méthylcaprolactone, la 2-méthylcaprolactone, la 5-hydroxydodécanolactone, la 12-hydroxydodécanolactone, l'acide 12-hydroxy-9-octadécénoïque, l'acide 12-hydroxyoctadécanoïque.

6. Résine de dispersion selon au moins l'une quelconque des revendications 1 à 5, **caractérisée en ce que** les groupes polyester présentent une masse moléculaire moyenne Mₙ de 100 à 5 000 g/mole.

7. Résine de dispersion selon au moins l'une quelconque des revendications 1 à 6, **caractérisée en ce que** les radicaux polyéther sont indépendamment les uns des autres des radicaux choisis dans le groupe constitué par l'oxyde d'éthylène, l'oxyde de propylène, l'oxyde de butylène, l'oxyde de dodécène, l'oxyde de tétradécène, le 2,3-dimethyloxirane, l'oxyde de cyclopentène, le 1,2-époxypentane, le 2-isopropyloxirane, le glycidylate de méthyle, le glycidylate d'isopropyle, l'épichlorhydrine, le 3-méthoxy-2,2-di-méthyloxirane, le 8-oxabicyclo[5.1.0]octane, le 2-pentyloxirane, le 2-méthyl-3-phényloxirane, le 2,3-époxypropylbenzène, le 2-(4-fluorophényl)oxirane, ainsi que leurs paires d'énantiomères purs ou mélanges d'énantiomères.

8. Utilisation des résines de dispersion selon l'une quelconque des revendications 1 à 7 en tant que dispersant pour matières solides dans la fabrication de pâtes de pigments, matières de revêtement, encres d'impression et/ou laques d'impression, contenant des liants ou sans liant.

9. Dispersions d'une matière solide dans un médium liquide, contenant au moins une résine de dispersion selon une ou plusieurs des revendications 1 à 7.
